# EUROPEAN PATENT APPLICATION

(11) **EP 3 225 828 A1**
(43) Date of publication of application: **04.10.2017**
(21) Application number: 16290055.9
(22) Date of filing: 29.03.2016
(51) Int. Cl.: F02M 35/10, F02M 35/12, F01N 1/00, F01N 1/02

(54) **ACOUSTIC RESONATOR STRUCTURE FOR USE IN A RESONATOR OF A MUFFLER AND MUFFLER HAVING AN ACOUSTIC RESONATOR STRUCTURE**

(71) Applicant: MANN+HUMMEL GmbH, 71638 Ludwigsburg (DE)
(72) Inventor: Launay, Tristian, 53000 Laval (FR); Migaud, Jérôme, 35500 Vitré (FR); Ratajczack, Christelle, 53260 Forcé (FR); Robichon, Pascal, 53000 Laval (FR); Limousin, Eric, 53210 Argentré (FR)
(74) Representative: Seyboth, Matthias

(57) **Abstract**

The invention relates to an acoustic resonator structure (50) for a resonator (10) for a muffler (100) of an air duct (20), in particular for a charge air duct for a turbocharged engine, having an intended flow direction (18), wherein
- at least one pattern region (70) being provided in a peripheral wall (28) and comprising a multitude of openings (52, 54, 56);
- the openings (52, 54, 56) being distributed in a non-periodic manner within the at least one pattern region (70);
- the openings (52, 54, 56) in the pattern region (70) being divided into at least two groups wherein the groups distinguish from each other by the size of the openings (52, 54, 56), wherein openings (52, 54, 56) belonging to the same group have equal opening areas and opening areas of openings (52, 54, 56) belonging to different groups in the pattern region (70) differ by at least 15%

The invention relates also to a muffler (100) comprising comprising an air duct (20) and a resonator (10), the resonator (10) cooperating with the acoustic resonator structure (50).

## Description

### Technical Field

The invention relates to an acoustic resonator structure for use in a resonator of a muffler and a muffler having an acoustic resonator structure, more particularly, the invention relates to a muffler for a charge air duct for a turbocharged engine, such as a one-stage turbocharged engine or a multi-stage turbocharged engine.

### Prior Art

Charge air within the meaning of the invention shall be understood as compressed air, compressed by an exhaust turbocharger or any other kind of charger.

For turbocharged engines, geometry, in particular diameter and length, of charge air ducts (also called charge air delivery ducts) is tuned to take benefits from pressure waves for improving the air filling into the engine cylinders, and thus performance. The air duct is a wave guide that propagates noise originating from the engine to the ambient. In order to reduce the pulsations at the air inlet orifice that is radiated to the outside of the vehicle, it is known in the art to provide acoustic devices such as resonators at strategic positions on the air duct.

However, in some cases with special flow conditions and/or atmospheric conditions the acoustic devices may generate a whistling noise which is created by the coupling of air excitation and a resonance volume.

### Disclosure of the Invention

It is an object of the invention to provide an acoustic resonator structure which reduces or eliminates such whistling noise.

Another object of the invention is to provide a muffler which reduces or eliminates such whistling noise.

The objects are achieved according to one aspect of the invention by an acoustic resonator structure for a resonator for a muffler of an air duct, having an intended flow direction, wherein at least one pattern region being provided in a peripheral wall and comprising a multitude of openings; the openings being distributed in a non-periodic manner within the at least one pattern region; the openings in the pattern region being divided into at least two groups wherein the groups distinguish from each other by the size of the openings, wherein openings belonging to the same group have equal opening areas and opening areas of openings belonging to different groups in the pattern region differ by at least 15%, and according to another aspect of the invention by a muffler comprising a resonator, an air duct and an acoustic resonator structure.

The other claims, the description and the drawings describe advantageous embodiments of the invention.

According to a first aspect of the invention, an acoustic resonator structure is proposed for a resonator for a muffler of an air duct, in particular for a charge air duct for a turbocharged engine, having an intended flow direction, wherein at least one pattern region being provided in a peripheral wall and comprising a multitude of openings; the openings being distributed in a non-periodic manner within the at least one pattern region; the openings in the pattern region being divided into at least two groups wherein the groups distinguish from each other by the size of the openings, wherein openings belonging to the same group have equal opening areas and opening areas of openings belonging to different groups in the pattern region differ by at least 15%.

Advantageously, whistling noise in a damper comprising a resonator which cooperates with the inventive acoustic resonator structure can be reduced or even eliminated, while a good resonator function is maintained. A random scheme of such openings having different areas can cancel the whistling noise. The randomly arranged openings may be equally distributed in the pattern region.

According to an advantageous embodiment openings arranged side by side along the intended flow direction may have different areas each. The reduction of whistling noise can be improved by the random arrangement of the openings.

According to an advantageous embodiment spacings between openings arranged along the intended flow direction may be different each. The reduction of whistling noise can be improved by the random arrangement of the openings.

According to an advantageous embodiment the number of openings in different groups in the at least one pattern region may differ by not more than 25%. For instance, the numbers of openings in the groups may be identical or may differ by one opening. The reduction of whistling noise can be improved.

According to an advantageous embodiment the opening areas of the openings belonging to different groups in the pattern region may differ by at least 30%, preferably by at least 40%, more preferably by at least 50%. A variety of combinations of area sizes is possible to meet actual needs in an ambience with given operation parameters.

According to an advantageous embodiment at least three groups of openings may be provided in the pattern region. A variety of combinations of area sizes of three groups of openings is possible to meet actual needs in an ambience with given operation parameters.

According to an advantageous embodiment the openings may have circular cross sections. An acoustic resonator structure with a random arrangement of circular openings is easy to design.

According to an advantageous embodiment the diameters of the openings belonging to two different groups may by differ at least 0,5 mm, preferably by at least 1 mm. A reliable manufacturing is possible with stable material bridges between the openings.

According to an advantageous embodiment the diameters of the openings may be at least 1 mm and at most 10 mm, preferably at least 3 mm and at most 6 mm. A variety of combinations of diameters of openings is possible to meet actual needs in an ambience with given operation parameters:

According to an advantageous embodiment the openings may have triangular, square or polyangular cross sections. The design allows for flexibility in design. Generally, it may be possible to combine openings of different types of cross sections in the acoustic resonator structure.

According to another aspect of the invention a muffler is proposed, in particular for a charge air duct for a turbocharged engine, comprising an air duct and a resonator, wherein (i) the resonator comprises a housing around at least one resonator chamber; (ii) the air duct comprises at least an input duct, a central duct and an output duct; (iii) the central duct comprises at least one acoustic resonator structure according to the invention, comprising openings arranged in a peripheral wall of the central duct, wherein at least one pattern region being provided in a peripheral wall of the central duct of the air duct and comprising a multitude of openings; the openings being distributed in a non-periodic manner within the at least one pattern region; the openings in the at least one pattern region being divided into at least two groups wherein the at least two groups distinguish from each other by the size of the openings; wherein openings belonging to the same group have equal opening areas and opening areas of openings belonging to different groups in the at least one pattern region differ by at least 15%;. The resonator is arranged around the peripheral wall of the central duct covering the acoustic resonator structure.

Advantageously, a non-periodic and thus random arrangement of the openings allows for cancelling whistling noise which may arise under certain operation conditions e.g. by the coupling of air excitation and a resonance volume.

According to an advantageous embodiment at least two resonator chambers may be provided in series along a flow direction of the air duct. A good resonator function can be maintained.

According to an advantageous embodiment each resonator chamber may be provided with the acoustic resonator structure. A good resonator function can be maintained while whistling noise emission can be eliminated.

According to an advantageous embodiment the acoustic resonator structure may cover at least 50% of the circumference of the peripheral wall of the central duct. Alternatively, according to an advantageous embodiment, the acoustic resonator structure may cover predominantly one side of the peripheral wall. The acoustic resonator structure may be continuously distributed around the circumference of the central duct. The acoustic resonator structure may be arranged on one side of the central duct. The acoustic resonator structure may be arranged in separate areas of the central duct.

### Brief Description of the Drawings

The present invention together with the above-mentioned and other objects and advantages may best be understood from the following detailed description of the embodiments, but not restricted to the embodiments, wherein is shown in:
- Figure 1: in a longitudinal cut view a muffler comprising a resonator surrounding an acoustic resonator structure in a central duct of an air duct having one resonator chamber according to a first example embodiment of the invention;
- Figure 2: in an isometric view an example embodiment of an acoustic resonator structure having two pattern regions in series;
- Figure 3: in a schematic representation a muffler comprising a resonator surrounding an acoustic resonator structure in a central duct of an air duct having two resonator chambers in series according to an example embodiment of the invention;
- Figure 4: an expanded view of the acoustic resonator structure of Figure 2.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

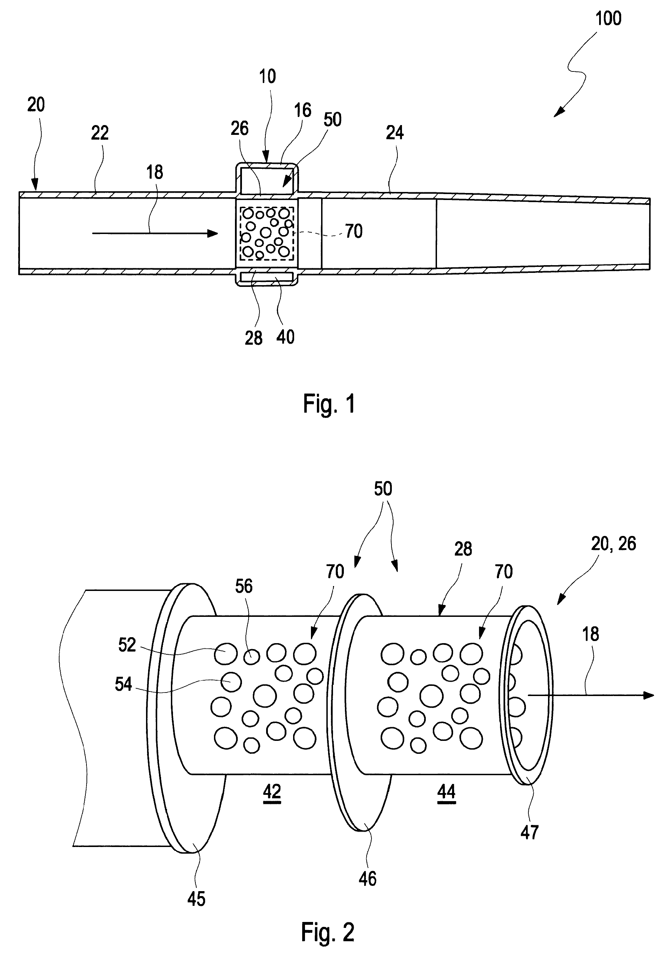

Figure 1 depicts in a longitudinal cut view a muffler 100 comprising a resonator 10 according to a first example embodiment of the invention having one resonator chamber 40.

The acoustic resonator structure 50 is intended for use in the resonator 10 for the muffler 100 of an air duct 20, in particular for a charge air duct for a turbocharged engine. The air duct 20 comprises an input duct 22, a central duct 26 and an output duct 24 with flow of air in flow direction 18.

The acoustic resonator structure 50 is arranged in the peripheral wall 28 of the central air duct 26. The resonator 10 is surrounding the acoustic resonator structure 50 in the central duct 26. Between the resonator 10 and the peripheral wall 28 of the central duct 26 a resonator chamber 40 is formed, as is generally known in the art of resonators.

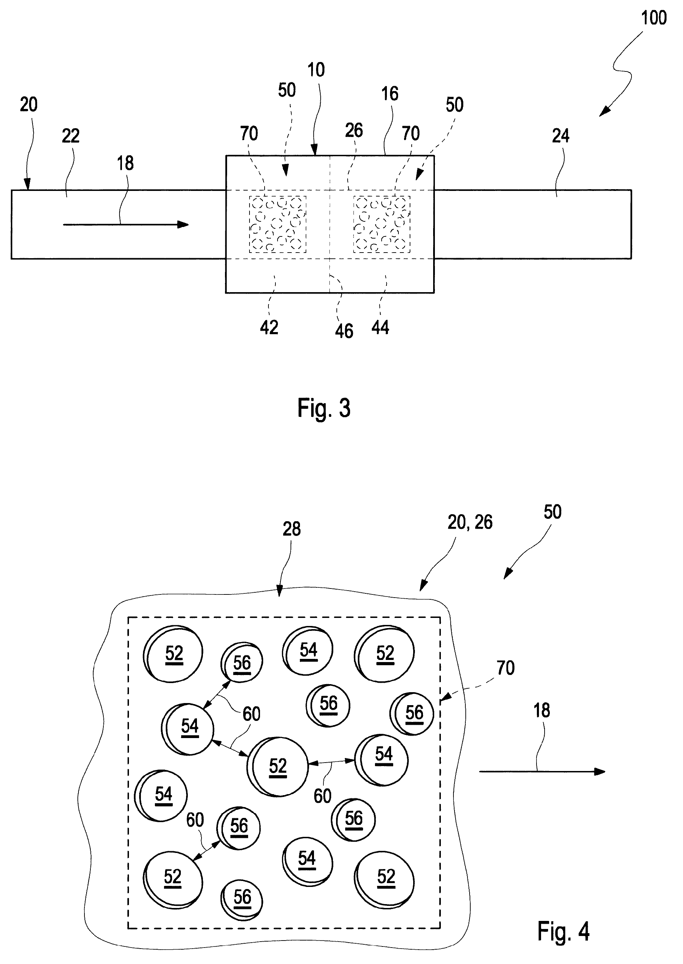

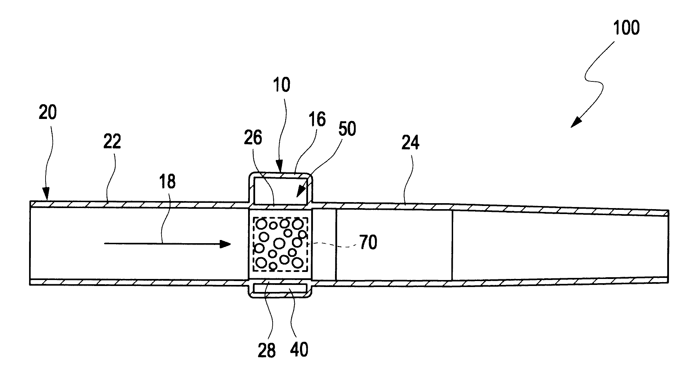

The housing 16 of the resonator chamber 40 is arranged eccentrically around the central duct 26. A pattern region 70 is provided in a peripheral wall 28 of the central duct 26. The pattern region 70 comprises a multitude of openings which are distributed in a non-periodic, i.e. random, manner within the pattern region 70. Sound waves can the resonator chamber 40 through the openings. The resonator structure 50 is explained in more detail in Figure 4.

Between the resonator 10 and the peripheral wall 28 of the central duct 26 one or more resonator chambers 42, 44 are formed, as is generally known in the art of resonators.

An isometric view of an example embodiment of an acoustic resonator structure 50 is illustrated in Figure 2. Figure 4 depicts an expanded view of the acoustic resonator structure 50 of Figures 1 and 2, while Figure 3 illustrates schematic representation a muffler 100 comprising a resonator 10 and an acoustic resonator structure 50 according to Figure 2 having two resonator chambers 42, 44 with two acoustic resonator structures 50 in series.

In the example embodiment shown in Figures 2 and 3, two duct segments comprising pattern regions 70 with an acoustic resonator structure 50 each are arranged in series along the flow direction 18 of the air duct 20. By way of example, there are two pattern regions 70 in each duct segment provided on opposing sides of the central duct 26. The two duct segments having the pattern regions 70 are separated by a separator wall 46. A first resonator chamber 42 is provided by the volume between the peripheral wall 28 and the resonator wall (not shown) surrounding the central duct 26, the side wall 45 and the separator wall 46. A second resonator chamber 42 is formed by the volume between the peripheral wall 28 and the resonator wall (not shown) surrounding the central duct 26 and the separator wall 46 and the side wall 47.

The acoustic resonator structure 50 in Figure 4 comprises a pattern region 70 being provided in a peripheral wall 28 of the central duct 26 of the air duct 20 and comprises a multitude of openings 52, 54, 56. The openings 52, 54, 56 are distributed in a random, non-periodic manner within the pattern region 70. The openings 52, 54, 56 in the pattern region 70 being divided into at least two groups wherein the groups distinguish from each other by the size of the openings 52, 54, 56. The openings 52, 54, 56 belonging to the same group have equal opening areas and opening areas of openings 52, 54, 56 belonging to different groups in the pattern region 70 differ by at least 15%, preferably by at least 30%, more preferably by at least 40%, more preferably by at least 50%.

Openings 52, 54, 56 arranged side by side along the intended flow direction 18 have different areas each, and spacings 60 between openings 52, 54, 56 arranged along the intended flow direction 18 are different each. The number of openings 52, 54, 56 in different groups in the pattern region 70 may differ by not more than 25%. By way of example, the openings 52, 54, 56 have circular cross sections.

In one embodiment, the diameter of the openings 52 of the first group and the diameter of the openings 54 of the second group and the diameter of the openings 56 of the third group differ by at least 1 mm each. In this example, the diameter of the openings 52 of the first group is 5 mm, the diameter of the openings 54 of the second group is 4 mm and the diameter of the openings 56 of the third group is 3 mm. For instance, the pattern region 70 comprises five openings 52, five openings 54 and six openings 56.

In another example not shown, the diameter of the openings 52 of the first group is 5 mm, the diameter of the openings 54 of the second group is 4 mm and the diameter of the openings 56 of the third group is 3 mm. For instance, the pattern region 70 comprises six openings 52, six openings 54 and six openings 56.

The distribution of the openings 52, 54, 56 belonging to different groups is randomly, in a non-periodic fashion within the pattern region 70. Starting form one of the openings 52, 54, 56, the closest distance (spacing 60) to the next neighboring openings 52, 54, 56 is different in each direction.

## Claims

1. An acoustic resonator structure (50) for a resonator (10) for a muffler (100) of an air duct (20), in particular for a charge air duct for a turbocharged engine, having an intended flow direction (18), wherein
- at least one pattern region (70) being provided in a peripheral wall (28) and comprising a multitude of openings (52, 54, 56);
- the openings (52, 54, 56) being distributed in a non-periodic manner within the at least one pattern region (70);
- the openings (52, 54, 56) in the pattern region (70) being divided into at least two groups wherein the groups distinguish from each other by the size of the openings (52, 54, 56),
wherein openings (52, 54, 56) belonging to the same group have equal opening areas and opening areas of openings (52, 54, 56) belonging to different groups in the pattern region (70) differ by at least 15%.

2. The acoustic resonator structure according to claim 1, wherein openings (52, 54, 56) arranged side by side along the intended flow direction (18) have different areas each.

3. The acoustic resonator structure according to claim 1 or 2, wherein spacings (60) between openings (52, 54, 56) arranged along the intended flow direction (18) are different each.

4. The acoustic resonator structure according to any one of the preceding claims, wherein the number of openings (52, 54, 56) in different groups in the at least one pattern region (70) differ by not more than 25%.

5. The acoustic resonator structure according to any one of the preceding claims, wherein the opening areas of the openings (52, 54, 56) belonging to different groups in the pattern region (70) differ by at least 50%.

6. The acoustic resonator structure according to any one of the preceding claims, wherein at least three groups of openings (52, 54, 56) are provided in the pattern region (70).

7. The acoustic resonator structure according to any one of the preceding claims, wherein the openings (52, 54, 56) have circular cross sections.

8. The acoustic resonator structure according to claim 5, wherein the diameters of the openings (52, 54, 56) belonging two different groups differ by at least 0,5 mm.

9. The acoustic resonator structure according to claim 5 or 6, wherein the diameters of the openings (52, 54, 56) are at least 1 mm and at most 10 mm, preferably at least 3 mm and at most 6 mm.

10. The acoustic resonator structure according to any one of the claims 1 to 4, wherein the openings (52, 54, 56) have triangular, square, or polyangular cross sections.

11. A muffler (100), in particular for a charge air duct for a turbocharged engine, comprising an air duct (20) and a resonator (10), wherein
(i) the resonator (10) comprises a housing (16) around at least one resonator chamber (40, 42, 44),
(ii) the air duct (20) comprises at least an input duct (22), a central duct (26) and an output duct (24),
(iii) at least one acoustic resonator structure (50) according to any one of the preceding claims is provided, comprising
- at least one pattern region (70) being provided in a peripheral wall (28) of the central duct (26) of the air duct (20) and comprising a multitude of openings (52, 54, 56);
- the openings (52, 54, 56) being distributed in a non-periodic manner within the at least one pattern region (70);
- the openings (52, 54, 56) in the at least one pattern region (70) being divided into at least two groups wherein the at least two groups distinguish from each other by the size of the openings (52, 54, 56); wherein openings (52, 54, 56) belonging to the same group have equal opening areas and opening areas of openings (52, 54, 56) belonging to different groups in the at least one pattern region (70) differ by at least 15%; and
(iv) the resonator (10) is arranged around the peripheral wall (28) of the central duct (26) covering the acoustic resonator structure (50).

12. The muffler according to any one of the claims 11, wherein at least two resonator chambers (42, 44) are provided in series along a flow direction (18) of the air duct (20).

13. The muffler according to any one of the claims 11 or 12, wherein each resonator chamber (40, 42, 44) is provided with the acoustic resonator structure (50).

14. The muffler according to any one of the claims 11 to 13, wherein the acoustic resonator structure (50) covers at least 50% of the circumference of the peripheral wall (28).

15. The muffler according to any one of the claims 11 to 14, wherein the acoustic resonator structure (50) covers predominantly one side of the peripheral wall (28).
